# EUROPÄISCHE PATENTSCHRIFT

(11) **EP 0 424 629 B1**
(45) Veröffentlichungstag und Bekanntmachung des Hinweises auf die Patenterteilung: **27.10.1993**
(21) Anmeldenummer: 90116044.0
(22) Anmeldetag: 22.08.1990
(51) Int. Cl.: B62D 1/18

(54) **Lösbare Arretiervorrichtung für eine in Längsrichtung verstellbare Fahrzeuglenksäule**
Releasable locking device for a longitudinally adjustable vehicle steering column
Dispositif d'arrêt détachable pour la colonne de direction ajustable en longueur d'une voiture

(30) Priorität: 27.10.1989 DE 3935832
(43) Veröffentlichungstag der Anmeldung: 02.05.1991
(73) Patentinhaber: MERCEDES-BENZ AG, 70327 Stuttgart (DE)
(72) Erfinder: Dumschat, Rainer, D-7322 Donzdorf (DE); Schremmer, Gottfried, D-7146 Tamm (DE)

(56) Entgegenhaltungen:
- EP-A- 0 317 791
- WO-A-80/01478
- DD-A- 264 894
- DE-A- 2 417 543
- DE-U- 8 812 673

## Beschreibung

Die Erfindung betrifft eine lösbare Arretiervorrichtung nach dem Oberbegriff des Anspruchs 1.

In der WO 80/01478 ist eine Arretiervorrichtung für eine verstellbare Fahrzeuglenksäule beschrieben, bei der eine Kolben-Zylinder-Einheit mit je einem Ende an zwei Lenksäulenteilen angelenkt ist, welche bei der Beaufschlagung dieser Kolben-Zylinder-Einheit auseinanderschiebbar sind. Die Kolben-Zylinder-Einheit wird durch den Ölstrom aus einer Zuleitung betätigt und über ein bedienbares Ventil gesteuert. Bei diesen beidendig notwendigen Druckanschlüßen muß der Oeldruck auch nach dem Erlangen der Arretierposition der Lenksäule aufrechterhalten werden.

Eine Arretierung, die einen hydraulisch beaufschlagten Kolben umfaßt, ist aus einer Vorrichtung zur Lenkradverstellung bei Kraftfahrzeugen bekannt und im DE-GM 88 12 673 beschrieben. Hier wird ein ansonsten unbeaufschlagter Kolben zur Lösung einer Lenksäulenklemmung über eine Hydraulikflüssigkeit druckbeaufschlagt, wodurch der Kolben gegen die Klemmkraft von Tellerfedern wirkt. Die Klemmkraft für die Arretierung des verschiebbaren Lenksäulenteils wird hier allein durch die Tellerfedern aufgebracht, die zwei Halbschalen eines Führungskörpers mit dem Lenksäulenteil verspannen. Aus dieser nachgiebigen, reibschlüssigen Klemmung kann keine verschiebungssichere Festlegung der Lenksäule bei einem Aufprall auf das Lenkrad resultieren. Wird die Klemmung der Lenksäule durch eine Betätigung des mechanischen Betätigungshebels und durch den dadurch bewirkten Druck des hydraulisch beaufschlagten Kolbens auf die Tellerfedern gelöst, so ist die Lenksäule frei im Führungskörper verschiebbar und wird dazu neigen, durch ihr Gewicht und das des Lenkrads ungebremst im Führungskörper nach unten zu rutschen.

In der DE-OS 24 17 543 ist eine Kolben-Zylinder-Einheit bei einer Sicherheitslenksäule bekannt, die bei einem Zusammenstoß die wirksam werdende Stoßenergie aufnimmt. Dazu ist das Lenkungsteil axial verschiebbar in einer inkompressibles Medium aufweisenden Kammer in der Lenksäule geführt. Dieser Kammer ist eine weitere Kammer über einen Strömungskanal nachgeschaltet, in dem ein ansteuerbares Durchflußventil angeordnet ist.

Aus der US-PS 2 549 345 ist eine Arretiervorrichtung für eine Lenksäule bekannt, bei der ein teleskopartig zusammenschiebbares Mantelrohr den Zylinder einer Kolben-Zylinder Einheit bildet. Dies führt dazu, daß für dieses Mantelrohr bei der Herstellung besonderer Aufwand notwendig ist, da dieser Zylinder auch bei einem Aufprall auf das Lenkrad nicht undicht werden darf.

Außerdem ist bei einem derart großen Zylinder eine Übereinstimmung des Überströmvolumens aus einer Kammer mit dem Aufnahmevolumen der anderen Kammer kaum zu verwirklichen, weshalb in dieser Ausführung ein Luftaustausch zwischen den Kammern stattfindet, der die Stabilität der Lenksäule in Frage stellt.

Der Erfindung liegt die Aufgabe zugrunde, eine Arretierung für eine in Längsrichtung höhenverstellbare Fahrzeuglenksäule aufprallstabil und bedienungsgünstig auszubilden.

Die Aufgabe wird durch die kennzeichnenden Merkmale des Anspruchs 1 gelöst.

Die achsparallel zur Lenksäule angeordnete, abgeschlossene hydraulische Kolben-Zylinder-Einheit läßt nach dem Öffnen der Absperrvorrichtung eine stufenlose Verstellung des verschiebbaren Lenksäulenabschnitts zu, während es bei geschlossenem Durchfluß durch sein im Zylinder hydraulisch geschlossenes System vollständig unnachgiebig ist. Dies führt dazu, daß die Lenksäule in diesem Bereich konsequent die Aufprallkräfte, die auf das Lenkrad wirken, in die Befestigung einleitet. Eine vollständige Flüssigkeitsfüllung der bei einem Aufprall auf das Lenkrad druckbeaufschlagten Zylinderkammer kann einfach dadurch erreicht werden, daß sich beide Zylinderkammern in der Verdrängung und der Aufnahme des Flüssigkeitsvolumens entsprechen, wie es sich z.B. bei einer beidseitigen Kolbenstange ergibt. Eine Rückprallenergie gegen eine sich bei einem Unfall am Lenkrad abstützende Person, wie sie z. B. bei einer für die Positionierung der Lenksäule verwendeten Gasdruckfeder ergeben könnte, ist hier keinesfalls zu erwarten. Die Lenkradverstellung in Axialrichtung der Lenksäule ist also einfach mechanisch durch die Betätigung der Absperrvorrichtung ermöglicht, wobei aber der verschiebbare Lenksäulenabschnitt durch die Dämpfung, hervorgerufen durch den begrenzten Durchflußquerschnitt eines Ventils, nicht nach unten sackt, sondern mit leichtem Widerstand durch das durch die Ventilöffnung fließende Fluid nach oben gezogen oder nach unten gedrückt werden kann. Dabei kann eine Begrenzung der Verschiebebewegung des Lenksäulenabschnitts durch eine vorgesehene Begrenzung der Kolbenverschiebung im Zylinder herbeigeführt werden.

Die Gegenstände weiterer Unteransprüche bilden vorteilhafte Ausgestaltungsmöglichkeiten der Gegenstände vorherstehender Ansprüche.

Ein Ausführungsbeispiel der Erfindung ist in der Zeichnung dargestellt.

Es zeigen:
- Fig. 1: in Seitenansicht eine in Längsrichtung verstellbare Fahrzeuglenksäule mit einem Lenkrad, und
- Fig. 2: im Detail eine für die Arretierung der Lenksäule eingesetzte, abgeschlossene hydraulische Kolben-Zylinder-Einheit.

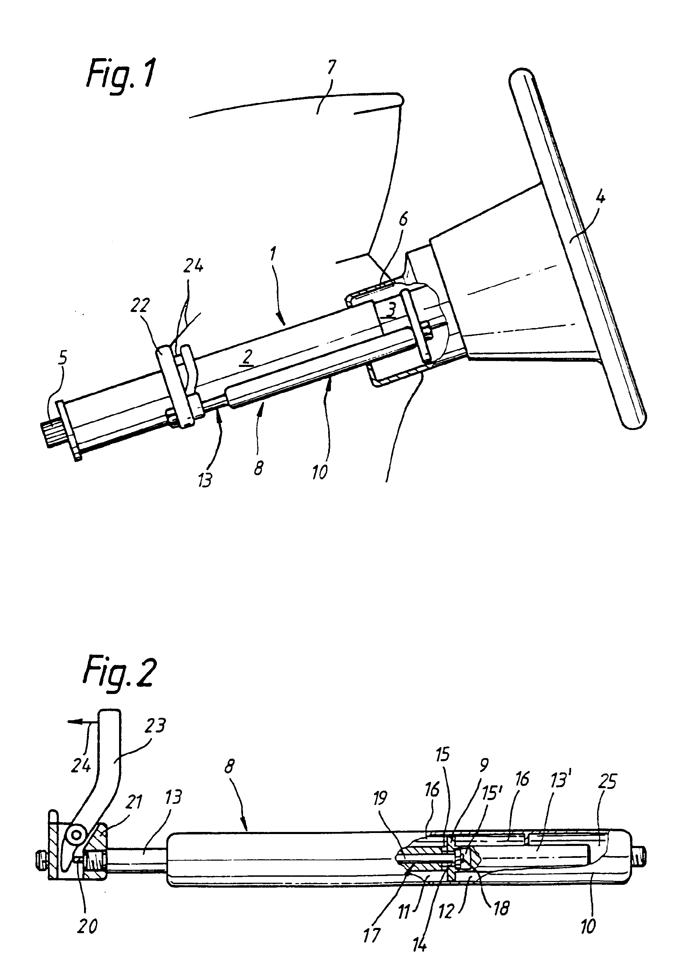

Fig. 1 zeigt eine Fahrzeuglenksäule 1, die ein lagefestes Lenksäulenteil 2 und einen verschiebbaren Lenksäulenabschnitt 3 umfaßt. Das Lenksäulenteil 2 und der Lenksäulenabschnitt 3 sind hier durch zwei Mantelrohrteile gebildet, welche teleskopartig zusammenzuschieben sind. Endseitig des verschiebbaren Lenksäulenabschnitts 3 ist ein Lenkrad 4 auf einer zentral in der Lenksäule 1 verlaufenden Lenkwelle 5 festgelegt, an welches ein Verkleidungsteil 6 anschließt, das auch den Übergang des verschiebbaren Lenksäulenabschnitts 3 zum lagefesten Lenksäulenteil 2 in einer Armaturentafel 7 überdeckt. Damit der verstellbare Lenksäulenabschnitt 3 in einer zu einem Fahrzeugführer in der Höhe passenden Position arretiert werden kann, ist achsparallel zur Lenksäule 1 eine hydraulische Kolben-Zylinder-Einheit 8 angeordnet, von der ein Kolben 9 über eine Kolbenstange 13 am lagefesten Lenksäulenteil 2 und der Zylinder 10 am verschiebbaren Lenksäulenabschnitt 3 festgelegt ist.

Beidseitig des Kolbens 9 befinden sich zwei flüssigkeitsgefüllte, abgeschlossene Zylinderkammern 11 und 12, durch die jeweils zentral eine Kolbenstange 13 bzw. 13' ragt. Die Kolbenstange 13' dient der Angleichung des Verdrängungs- bzw. Aufnahmevolumens beider Zylinderkammern 11 und 12 aneinander und ragt bei ihrer Verschiebung in eine weitere Zylinderkammer 25 hinein, die aber gegen die flüssigkeitsgefüllte Zylinderkammer 12 abgedichtet ist.

Der Kolben 9 weist eine Durchflußbohrung 14 auf, die mit radialen Bohrungen 15 und 15' in den Kolbenstangen 13 und 13' verbunden ist, durch die die Arbeitsflüssigkeit 16 von einem Zylinderraum 11 in den anderen Zylinderraum 12 bzw. in die andere Richtung fließen kann. Die Zylinderräume 11 und 12 sind ansonsten flüssigkeitsdicht abgeschlossen.

Diese Durchflußmöglichkeit kann durch eine Absperrvorrichtung 17 gesperrt werden, welche hier durch ein Durchflußventil gebildet ist, das einen Ventilteller 18 und einen Ventilschaft 19 umfaßt. Der Ventilteller 18 deckt mit seinem Durchmesser die Durchflußbohrung 14 ab, und der Ventilschaft 19 ragt zentral durch die Kolbenstange 13 und überragt diese mit einem Endzapfen 20. Die Kolbenstange 13 ist endseitig zuerst in eine Betätigungsbuchse 21 eingeschraubt und mit dieser an einem Flansch 22 des lagefesten Lenksäulenteils 2 angeschraubt. In einem Freiraum der Betätigungsbuchse 21 ist weiterhin ein Betätigungshebel 23 schwenkbar gelagert, der bei einer an einem Ende angreifenden Zugkraft, die zum Beispiel über ein Zugseil 24 aufgebracht werden kann, mit seinem anderen Ende auf den Endzapfen 20 des Ventilschafts 19 drückt, und diesen innerhalb der Kolbenstange 13 verschiebt, und dabei die Durchflußbohrung 14 freigibt. Nach dieser einfach zu handhabenden Betätigung kann also der Kolben 9 im Zylinder 10 verschoben werden, wobei die Arbeitsflüssigkeit 16 von einer Zylinderkammer 11 oder 12 in die anderen Zylinderkammer 12 bzw. 11 überströmt. Die bei einem Aufprall auf das Lenkrad 4 druckbeaufschlagte Zylinderkammer 12 ist dabei immer vollständig flüssigkeitsgefüllt. Um eine Verstellung der Lenksäule 1 in ihrer Längsrichtung zu erreichen, ist es demnach nur notwendig, ein mechanisches Betätigungsorgan 23 zu verschwenken, wonach die Arretierung durch den Kolben 9 im Zylinder 10 aufgehoben ist.

Da der Kolben 9 im Zylinder 10 keinen unbegrenzten Weg zurücklegen kann, ist es möglich, diese Begrenzung auch zur Begrenzung des Verschiebewegs des Lenksäulenabschnitts 3 zu nutzen.

Wird der Betätigungshebel 23 zurückgeschwenkt, so schließt der Ventilteller 18 die Durchflußbohrung 14 im Kolben 9, und der Kolben 9 liegt nun zwischen der Arbeitsflüssigkeit 16 in beiden Zylinderkammern 11 und 12 unbeweglich fest. Diese hydraulische Kolben-Zylinder-Einheit 8 arretiert dabei den verschiebbaren Lenksäulenabschnitt 3 in seiner Position gegenüber dem lagefesten Lenksäulenteil 2.

Es ist auch denkbar, daß das hydraulische Gestänge 8 und damit der Kolben 9 durch ein Mantelrohrteil 2 oder 3 und der Zylinder 10 durch ein weiteres, dieses übergreifende Mantelrohrteil 3 bzw. 2 gebildet wird.

## Patentansprüche

1. Lösbare Arretiervorrichtung für eine in Längsrichtung verstellbare, ein Lenkrad (4) tragende Fahrzeuglenksäule (1), mit einem karosserieseitigen Lenksäulenteil (2) und einem dazu verschiebbaren lenkradseitigen Lenksäulenabschnitt (3), der durch eine hydraulische Kolben-Zylinder-Einheit (8) festlegbar ist, die durch einen Kolben (9) getrennte Kammern (11,12) aufweist, seitlich versetzt und achsparallel zur Lenksäule (1) angeordnet, zwischen karosserieseitigem Lenksäulenteil (2) und lenkradseitigem Lenksäulenabschnitt (3) angelenkt und durch eine Ventileinheit absperrbar ist,
**dadurch gekennzeichnet,**
daß bei lagefester Anordnung des karosserieseitigen Lenksäulenteils (2) die Kammern (11 und 12) derart ausgebildet sind, daß bei einer Verschiebung des Kolbens (9) im Zylinder (10) das Überströmvolumen aus einer Kammer dem Aufnahmevolumen der anderen Kammer entspricht, und die Kolben-Zylinder Einheit (8) eine in sich geschlossene Einheit bildet, die in ihren verschiedenen Stützlagen bei vollständiger Flüssigkeitsbefüllung der bei einem Aufprall auf das Lenkrad (4) druckbeaufschlagten Kammer (12) durch eine im Überströmweg (14 und 15, 15') zwischen beiden Kammern (11 und 12) angeordnete Absperrvorrichtung (17) blockierbar ist.

2. Lösbare Arretiervorrichtung nach Anspruch 1,
**dadurch gekennzeichnet,**
daß durch den Kolben (9) ein Ventilschaft (19) ragt, der durch das mechanische Betätigungsorgan (23) verschiebbar ist, und daß ein daran festgelegter Ventilteller (18) eine Durchflußbohrung (14) im Kolben (9) überdeckt.

3. Lösbare Arretiervorrichtung nach einem der Ansprüche 1 oder 2,
**dadurch gekennzeichnet,**
daß durch eine Begrenzung der Kolbenverschiebung im Zylinder (10) der Verschiebeweg des Lenksäulenabschnitts (3) begrenzt ist.

## Claims

1. Removable arresting device for a vehicle steering column (1) adjustable in the longitudinal direction and supporting a steering wheel (4) with a steering column part (2) on the vehicle body side, and a steering column portion (3) movable towards it on the steering wheel side and which can be secured by means of a hydraulic piston cylinder unit (8) which has chambers (11, 12) separated by a piston (9) set off laterally and mounted axially parallel to the steering column (1), coupled between the steering column part (2) on the vehicle body side and the steering column portion (3) on the steering wheel side, and closable by means of a valve unit, characterized in that, with the secure arrangement in position of the steering column part (2) on the vehicle body side, the chambers (11 and 12) are so designed that, on a displacement of the piston (9) in the cylinder (10), the overflowing volume out of one chamber corresponds to the receiving volume of the other chamber, and the piston cylinder unit (8) forms a unit closed in itself which, in its various support positions, on a complete filling with fluid of the chamber (12) pressure-impinged on an impact onto the steering wheel (4) can be blocked by a shut-off device (17) mounted in the overflow path (14 and 15, 15') between the two chambers (11 and 12).

2. Removable arresting device according to claim 1, characterized in that, protruding through the piston (9) is a valve stem (19) which is displaceable by means of the mechanical actuation unit (23), and in that a valve disc (18) secured thereto covers a throughflow passage (14) in the piston (9).

3. Removable arresting device according to either claim 1 or claim 2, characterized in that the displacement path of the steering column portion (3) is restricted by a limitation of the piston displacement in the cylinder (10).

## Revendications

1. Dispositif de blocage amovible pour une colonne de direction de véhicule (1), qui est déplaçable dans la direction longitudinale et porte un volant (4), comportant une partie (2) solidaire de la carrosserie et une section (3) déplaçable par rapport à la précédente et solidaire du volant et qui peut être bloquée par une unité hydraulique à piston et cylindre (8), qui possède des chambres (11,12) séparées par un piston (9), est disposée en étant décalée latéralement et en étant parallèle à l'axe de la colonne de direction (1), est articulée entre la partie (2) de la colonne de direction, solidaire de la carrosserie, et la section (3) de la colonne de direction, solidaire du volant, et peut être fermée par une unité de soupape,
caractérisé en ce
que, dans le cas d'un montage fixe de la partie (2) de la colonne de direction, située sur la carrosserie, les chambres (11 et 12) sont agencées de telle sorte que, lors d'un déplacement du piston (9) dans le cylindre (10), le volume de trop-plein provenant d'une chambre correspond au volume de réception de l'autre chambre, et l'unité à piston et cylindre (8) forme une unité fermée sur elle-même qui, dans ses différentes positions d'appui, lors du remplissage complet, avec un liquide, de la chambre (12) chargée en pression lors d'un choc appliqué au volant (4), peut être bloquée par un dispositif de fermeture (17) disposé dans le trajet de l'écoulement de trop-plein (14 et 15, 15') entre les deux chambres (11 et 12).

2. Dispositif de blocage amovible selon la revendication 1, caractérisé en ce qu'une tige de soupape (19) pénètre dans le piston (9) et est déplaçable à l'aide de l'organe d'actionnement mécanique (23), et qu'un disque de soupape (18), fixé à cette tige, ferme un passage de traversée (14) dans le piston (9).

3. Dispositif de blocage amovible selon l'une des revendications 1 ou 2, caractérisé en ce que le trajet de déplacement de la section (3) de la colonne de direction est limité au moyen d'une limitation de la translation du piston dans le cylindre (10).
